# EUROPEAN PATENT APPLICATION

(11) **EP 2 146 255 A1**
(43) Date of publication of application: **20.01.2010**
(21) Application number: 09165411.1
(22) Date of filing: 14.07.2009
(51) Int. Cl.: G03G 21/18, G03G 21/20, G07C 5/00, G06Q 10/00

(54) **Recycling aid system, electronic apparatus, and recycling aid method**

(30) Priority: 18.07.2008 JP 2008186798
(71) Applicant: Ricoh Company, Ltd., Tokyo 143-8555 (JP)
(72) Inventor: Tamada, Yasuto, Kanagawa (JP)
(74) Representative: Schwabe - Sandmair - Marx

(57) **Abstract**

A recycling aid system for aiding a recycling process of an electronic apparatus is disclosed. The recycling aid system includes: the electronic apparatus; a radio communication apparatus placed in a location on a route through which the electronic apparatus moves; and a management server apparatus connected to the electronic apparatus via the radio communication apparatus. The electronic apparatus includes: a unit configured to obtain physical measurement data of environment of the electronic apparatus, and to store the physical measurement data in a storage unit; a unit configured to obtain traceability data, and to store the traceability data in the storage unit; a unit configured to transmit the environment history data and the traceability data to the management server apparatus; and a unit configured to receive data including the environment history data and the traceability data from the management server apparatus, and to visually output the received data.

## Description

### BACKGROUND OF THE INVENTION

### 1. Field of the Invention

The present invention relates to a recycling aid system for aiding processes for recycling electronic apparatuses.

### 2. Description of the Related Art

As a conventional technology for aiding recycling of electronic apparatuses, Japanese Patent No.3941354 discloses a system for determining a residual lifetime of a part mounted on an apparatus in order to mount the part on another apparatus appropriate for the determined residual lifetime.

The criteria for determining the residual lifetime is a cumulative used time of the part mounted on the apparatus. That is, the residual lifetime is determined based on a value obtained by subtracting a use duration elapsed after the part was mounted on the apparatus from a value (lifetime) predetermined for the type of the part. Unused time of the apparatus is not taken into account for determining the residual lifetime.

That is, in the conventional technique, the lifetime of parts is a predetermined value relating to cumulative use time, and is predetermined for each type of the parts.

In addition, in the conventional technology, the residual lifetime of a target part is not determined directly from the target part. Instead, physical measurement data is indirectly measured from a detection element that has characteristics equivalent to those of the target part. Then, the residual lifetime of the target part is determined based on correlation of characteristics between the target part and the detection element.

The conventional technology (system for determining usage of apparatus mounted parts) includes the following features as necessary components.

The conventional system includes the target part for which a residual lifetime is diagnosed, a detection element having characteristics equivalent to lifetime deterioration characteristics of the target part, and a synchronization unit for synchronizing power supply for the target part and power supply for the detection element, which are integrally mounted on the system. In addition, the conventional system includes a unit on a network storing the characteristics data, and a determination function for determining usage of the target part.

Further, a measurement apparatus for measuring lifetime deterioration characteristics of the target part beforehand is required, and an apparatus for measuring characteristics of the detection element at the time of shipment and at the time of diagnosis is required. In addition, man-hours for performing the measurements are necessary.

Based on these components, it is realized to measure characteristics of the detection element that is integrated with the target part, and obtain correlation between the measured data and characteristics data of the target part that is stored beforehand in order to determine the residual lifetime and usage of the target part.

However, the conventional technology has the following problems as a system for detecting residual lifetime of collected products or parts.
(1) It is necessary to integrally mount the target part, the detection element and the synchronization unit for each target part for which the residual lifetime is to be diagnosed.
(2) It is necessary to determine, for each type of target parts for which residual lifetime is diagnosed, a detection element having a correlation with the target part, and it is necessary to provide a unit for measuring and storing characteristics data for obtaining the correlation.
(3) It is necessary to provide a unit for measuring special physical measurement data of the detection element at the time of product shipment and at the time of diagnosing the residual lifetime, and man-hours for the measurements are necessary.
(4) For performing (3), it is necessary to disassemble a complete product and units to the extent that the characteristics of the detection element can be measured when diagnosing the residual lifetime. Conversely, the conventional system cannot be utilized in a state of the complete product.
(5) The target part is limited to one by which the performance deteriorates due to elapse of use time and by which deterioration characteristics due to the cumulative use time correspond to predetermined characteristics. The conventional system cannot handle a part (such as hard disc, and a part in which a sponge or a rubber roller is used) by which there is a possibility of deterioration due to preservation state and environment of the apparatus even though the apparatus is not used (when AC power supply is not turned on).
(6) For determining usage of the target part for which the residual lifetime has been diagnosed, only the residual lifetime is used as a parameter as a criterion for selection. However, actually, as for parts that are used for the same usage in plurality of types of apparatuses (apparatuses having different functions and performances), characteristics of the parts are not necessarily the same with each other. In addition, the units for synchronizing the power supply are not necessarily the same.

It can be considered that the problems (1)-(6) of the conventional technology include many unrealistic elements from the viewpoint of the fact that optimum part selection is rapidly performed due to rapid technology advance in machine design in recent years and from the viewpoint of a decrease of recycling cost man-hours.

### SUMMARY OF THE INVENTION

The present invention is conceived in view of the above-mentioned problems, and the object of the present invention is to provide a recycling aid technique that can check a target apparatus in a state of a complete product without disassembling the apparatus, and that can use various data for performing recycling processes.

For solving the above-problem, an embodiment of the present invention can be configured as a recycling aid system including:
an electronic apparatus;
a radio communication apparatus that is placed in a location on a route through which the electronic apparatus moves; and
a management server apparatus configured to perform data communication with the electronic apparatus via the radio communication apparatus;
the electronic apparatus including;
an environment history data obtaining unit configured to obtain physical measurement data of an environment of the electronic apparatus, and to store the physical measurement data in a storage unit as environment history data;
a traceability data obtaining unit configured to obtain traceability data used for determining the route, and to store the traceability data in the storage unit;
a communication unit configured to transmit the environment history data and the traceability data to the management server apparatus via the radio communication apparatus; and
an output unit configured to receive data including the environment history data and the traceability data from the management server apparatus, and to visually output the received data in order to aid a recycling process for the electronic apparatus.

According to the embodiment, a recycling aid technique can be provided that can check a target apparatus in a state of a complete product without disassembling the apparatus, and that can use various data for performing recycling processes.

### BRIEF DESCRIPTION OF THE DRAWINGS

Other objects, features and advantages of the present invention will become more apparent from the following detailed description when read in conjunction with the accompanying drawings, in which:
Fig. 1 is a block diagram showing an image forming apparatus of an embodiment of the present invention;
Fig. 2 is a block diagram showing a configuration example of an image forming apparatus control unit Al;
Fig. 3 is a block diagram showing a configuration example of a wireless sensor network control unit A2;
Fig. 4 is a schematic diagram for explaining an outline of the system for managing a moving route trace (continuing to Fig.5);
Fig. 5 is a schematic diagram for explaining an outline of the system for managing a moving route trace (continued from Fig.4, continuing to Fig.6);
Fig. 6 is a schematic diagram for explaining an outline of the system for managing a moving route trace (continued from Fig.5);
Figs. 7A-7C are graphs showing an output example 1 of traceability data and environment history data of a multifunction machine obtained by the recycling aid system of the present embodiment;
Figs. 8A-8C are graphs showing an output example 2 of traceability data and environment history data of a multifunction machine obtained by the recycling aid system of the present embodiment;
Figs. 9A-9C are graphs showing an output example 3 of traceability data and environment history data of a multifunction machine obtained by the recycling aid system of the present embodiment;
Fig. 10 shows a flowchart of an example of an environment history data storing process;
Fig. 11 shows a flowchart of an example of a replacement part candidate list output process; and
Figs. 12A and 12B are diagrams showing recycling condition input examples and comparison information examples.

### DETAILED DESCRIPTION OF THE PREFERRED EMBODIMENTS

In the following, embodiments of the present invention are described in detail with reference to attached figures.

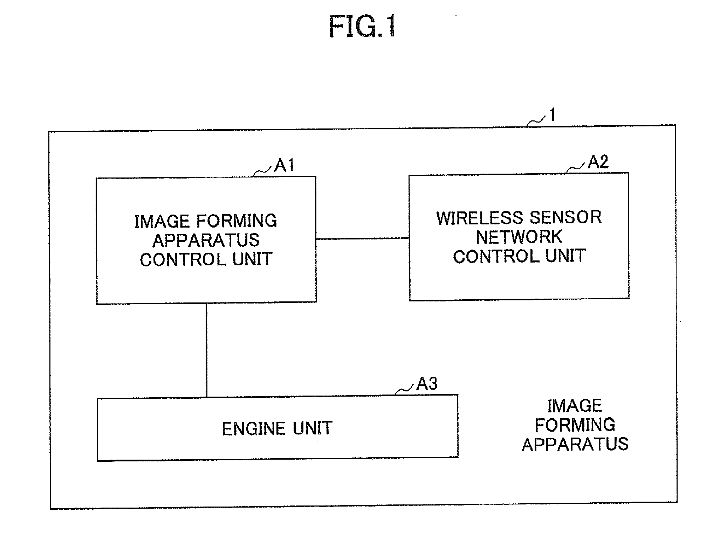

Fig.1 shows an image forming apparatus 1 according to an embodiment of the electronic apparatus of the present invention. As shown in the figure, the image forming apparatus 1 includes an engine unit A3, an image forming apparatus control unit A1, and a wireless sensor network control unit A2. The engine unit A3 includes hardware engines such as a printer engine for performing an image forming process which is a main function of the image forming apparatus 1.

ZigBee, which is one of wireless standards and which uses IEEE 802.15.4 as the physical layer interface, is adopted for wireless communication in the wireless sensor network control unit A2. The best characteristics of ZigBee are low power consumption and low cost.

For the sake of simplicity of explanation, the present embodiment adopts a configuration corresponding to a minimum basic system. In addition, for the sake of simplicity, physical measurement data detected in the body of the image forming apparatus 1 indicating a use environment, a transportation environment or a storage environment state are limited to temperature, humidity and vibration, and one part in the image forming apparatus 1 is measured for each of them.

The image forming apparatus control unit A1 controls essential functions (printing, scanning, ... etc.) of the image forming apparatus 1. The wireless sensor network control unit A2 includes a function for periodically extracting environment history data and storing the data in a storage. The environment history data indicates use environment, transportation environment or storage environment state of the image forming apparatus 1, and the environment history data includes data of the temperature, humidity and vibration of a specific part in the inside of the image forming apparatus 1.

In addition, the wireless sensor network control unit A2 includes a function for obtaining and storing traceability data of a route from initial shipment of the image forming apparatus 1 to a recycling factory. Further, the wireless sensor network control unit A2 includes a function for transmitting/receiving the data to/from a ZigBee relay node and a communication terminal and the like by radio.

The image forming apparatus control unit A1 and the wireless sensor network control unit A2 are configured to communicate with each other via their USB interface circuits. In the following, each control unit is described in the following in more detail.

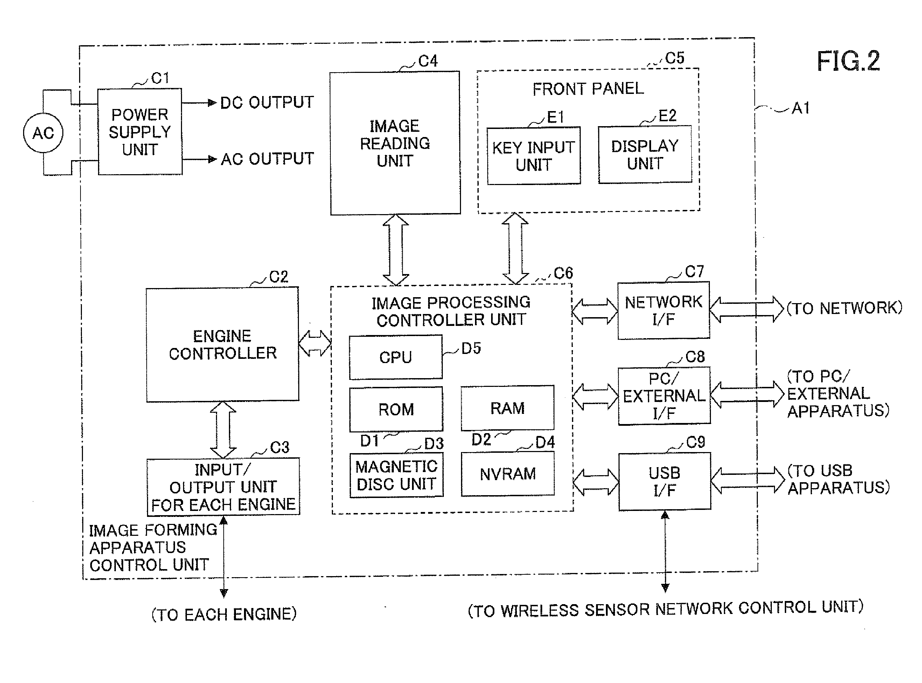

Fig.2 shows a configuration of the image forming apparatus control unit A1 according to an embodiment of the present invention. In the following, the image forming apparatus control unit A1 is described with reference to Fig.2.

As shown in Fig.2, the image forming apparatus control unit A1 includes a power supply unit C1, an engine controller C2, an input/output unit C3 for each engine, an image reading unit C4, a front panel C5, an image processing controller unit C6, a network I/F C7, a PC/external I/F C8, and a USB I/F. The front panel C5 includes a key input unit E1 and a display unit E2. The image processing controller unit C6 includes a ROM D1, a RAM D2, a magnetic disc device D3, a NVRAM D4 and a CPU D5.

The power supply unit C1 supplies power to each unit in the image forming apparatus control unit A1. The power supply unit C1 receives an AC current (alternating current) and outputs energy such as a DC current, a high voltage and the like necessary for operation of the image forming apparatus control unit A1. The engine controller C2 is provided for performing image forming processes that are the essential functions of the image forming apparatus 1. The engine controller C2 performs input control of various sensors via the engine input/output unit C3, and performs output control of a motor used for carrying print papers and a solenoid and the like.

The image processing controller unit C6 controls image processing necessary for image formation. For example, the image processing controller unit C6 receives image data from the image reading input unit C4, and receives a command or data from the general network interface C7, the PC/external interface C8 which is an interface supporting various standards for connecting to a PC or an external apparatus, or from the general USB interface C.

Then, the image processing controller unit C6 analyzes the image data, the command or data to perform image processing. The processed image data is sent to the engine controller C2 so that the image data is printed on a paper.

Also, the image processing controller unit C6 controls the key input unit E1 and the display unit E2 such as a LCD (Liquid Crystal Display) on the front panel C5 that is an interface with a human. Programs corresponding to a series of procedures are stored in the ROM D1 in the image processing controller unit C6. Processes are sequentially performed by the CPU D5 based on the programs while temporarily storing data used for the processes in the RAM D2.

The NVRAM (Non-Volatile Random Access Memory) D4 and the magnetic disc apparatus D3 store data which needs to be stored even in a state in which the power supply unit C1 is off. A flash ROM and the like can be used as the ROM D1 such that a stored program can be updated into a newest program via the network interface C7 based on an instruction from a product maintenance management server (described later) that manages maintenance and management data of the image forming apparatuses collectively.

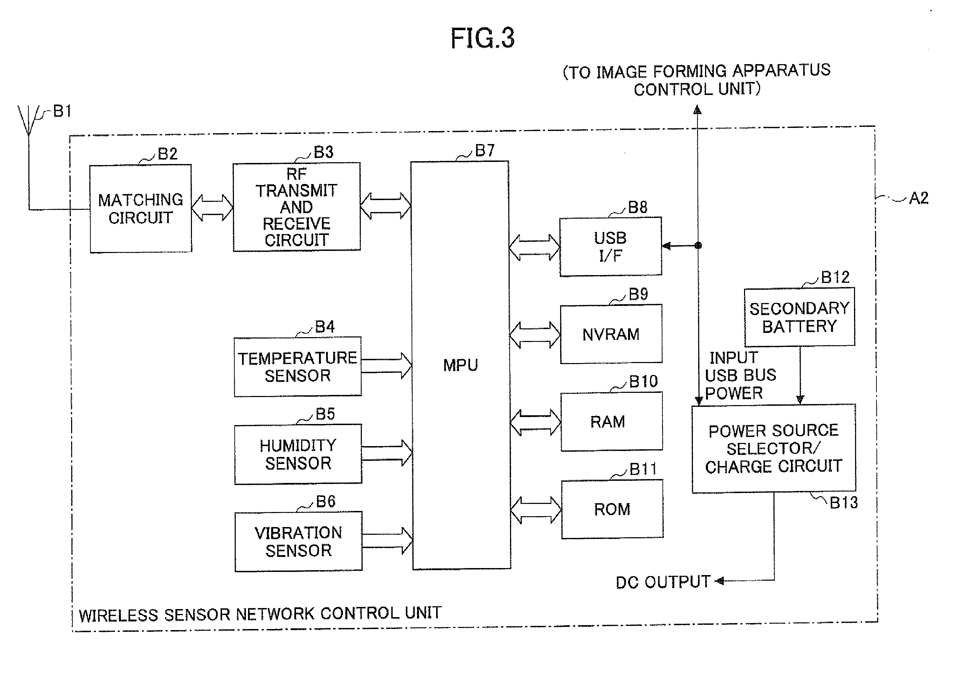

Fis.3 shows a configuration of the wireless sensor network control unit A2. In the following, the wireless sensor network control unit A2 is described with reference to Fig.3.

As shown in Fig.3, the wireless sensor network control unit A2 includes an antenna B1, a matching circuit B2, an RF transmit and receive circuit B3, a temperature sensor B4, a humidity sensor B5, and a vibration sensor B6, an MPU B7, a USB I/F B8, an NVRAM B9, a RAM B10, a ROM B11, a secondary battery B12, and a power source selector/charge circuit B13.

When an AC is input to the image forming apparatus control unit A1 so that the power supply unit C1 is ON and a DC is supplied, the wireless sensor network control unit A2 receives a DC input from the USB interface C9 by using bus power, and can operate using the power.

When a DC is not supplied from the image forming apparatus control unit A1, the wireless sensor network control unit A2 operates by obtaining energy from the secondary battery B12. In addition, the secondary battery B12 is charged as necessary when DC is provided from the image forming apparatus control unit A1. The power selector / charge circuit unit B13 performs the power selection control and the automatic charge control.

The MPU (Micro Processing Unit) B7 controls the whole of the wireless sensor network control unit A2. The temperature sensor B4, the humidity sensor B5 and the vibration sensor B6 obtain the environment history data of temperature, humidity and vibration at each specific part in the image forming apparatus 1. The MPU B7 receives the environment history data. Then, the environment history data is temporarily stored in the RAM B10, and is stored in the NVRAM B9 as necessary.

The traceability data of the route that is input as an electronic wave from the antenna B1 is effectively extracted by the matching circuit B2. The traceability data is input to the MPU B7 via the RF (Radio Frequency) transmit and receive circuit B3. After that, the data is temporarily stored in the RAM B10, and stored in the NVRAM B9 as necessary. The traceability data may be identification information of a communication apparatus (ZigBee/IP conversion GW apparatus, broadband router, and the like) which is connected to the wireless sensor network control unit A2.

The data (environment history data and traceability data) stored in the RAM B10 or the NVRAM B9 are transferred to a management server apparatus via the antenna B1 and the like each time when the image forming apparatus 1 arrives at a data send and receive terminal provided in each location point (factory, warehouse, sales side, etc.), or each time when it becomes possible that the image forming apparatus 1 can perform communication with a ZigBee node (described later) in each location.

By transferring the data to the management server apparatus, the data is deleted from the memory so that new data can be stored in an available area of the RAM B10 or the NVRAM B9 in the wireless sensor network control unit A2. Programs corresponding to the control procedures are stored in the ROM B11 of the wireless sensor network control unit A2 so that processes are executed sequentially. A flash ROM and the like can be used as the ROM B11 such that the program can be updated into a newest program via the network interface C7 and the USB interfaces C9 and B8 based on an instruction from the management server apparatus.

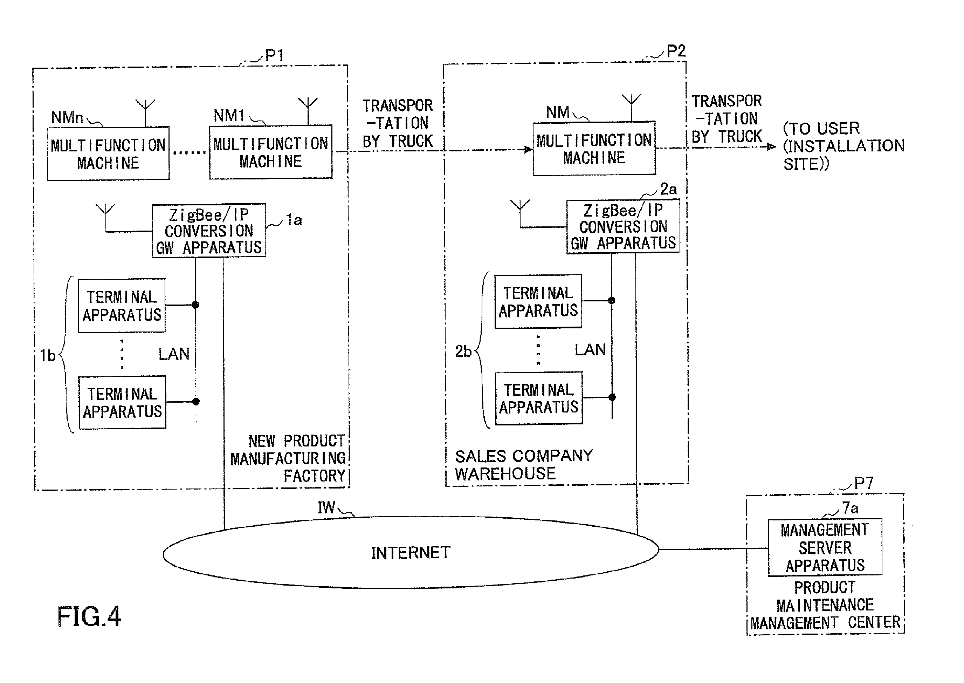

Next, an outline of the recycling aid system which performs the moving route trace and the like is described with reference to Figs.4-6. In this embodiment, a multifunction machine is used as a concrete example of the image forming apparatus 1. In addition, the following example shows a route from the time when the multifunction machine is shipped as a new product until the multifunction machine is transported to a recycling center after the whole use period of the multifunction machine ends.

In this embodiment, for the sake of simplicity of explanation, there are seven locations on the route to be traced, which are a new product manufacturing factory P1, a sales company warehouse P2, a user (installation site) P3, a manufacturer control collection warehouse P4, a manufacturer control collection center P5, a manufacturer control recycling center P6 and an exchange center P8. The exchange center P8 is a joint collection location which is not controlled by a single manufacture, and the exchange center P8 collects machines of various manufacturers.

The recycling aid system of the present embodiment includes the multifunction machine that is provided with the image forming apparatus control unit A1 and the wireless sensor network control unit A2, a communication apparatus (such as after mentioned ZigBee/IP conversion GW apparatus), and the management server apparatus.

First, as shown in Fig.4, in the new product manufacturing factory P1, a new product (multifunction machine) NM including the before-mentioned image forming apparatus control unit A1 and the wireless sensor network control unit A2 is manufactured.

As shown in Fig.4, the new product manufacturing factory P1 is provided with a ZigBee/IP conversion gateway 1a as a component of the recycling aid system. The multifunction machine NM can perform radio communication with the ZigBee/IP conversion gateway 1a. Also, based on the function of the ZigBee/IP conversion gateway 1a, the multifunction machine NM can communicate with terminal apparatuses 1b connected to a LAN (Local Area Network) in the factory.

In addition, since the LAN is connected to a WAN (Wide Area Network) in the factory, the ZigBee/IP conversion gateway 1a and the LAN terminal 1b can also connect to the Internet IW. Therefore, the multifunction machine NM can perform data communication with the management server apparatus 7a in the product maintenance management center P7.

By performing the data communication, the multifunction machine NM sends initial values to the management server apparatus 7a, so that the management server apparatus 7a stores the initial values. Examples of the initial values are a machine number of the multifunction machine, date and time of finishing, total number of print pages, a setting value of environment history data extraction store period, and a setting value of environment history data sampling cycle. Also, the management server apparatus 7a stores identification information of the multifunction machine NM. The identification information may be included in the initial values. After sending the initial values, measurement of traceability data and environment history data can start.

Identification information of the ZigBee/IP conversion gateway 1a in the factory (and in other locations) is also registered in the management server apparatus 7a. When data is transmitted to the management server apparatus 7a from the multifunction machine NM via the ZigBee/IP conversion gateway 1a, both of the identification information of the multifunction machine 1 and the identification of the ZigBee/IP conversion gateway 1a are sent to the management server apparatus 7a with the data. Thus, the management server apparatus 7a can detect the passing point (gateway) of the multifunction machine NM by detecting the identification information included in received data.

In the present embodiment, the wireless sensor network control unit A2 obtains traceability data from a communication apparatus (ZigBee/IP conversion gateway), and transmits the traceability data to the management server apparatus 7a. Alternatively, the above-mentioned identification information of the multifunction machine and the communication apparatus sent from the communication apparatus may be used as the traceability data.

After all of the initial procedures are completed, a truck carrying the multifunction machine NM leaves the factory, and arrives at the sales company warehouse P2. Even in the transportation stage, measurement of the environment history data is continuing.

As shown in Fig.4, a ZigBee/IP conversion gateway 2a is also installed in the sales company warehouse P2. When communication between the multifunction machine NM and the ZigBee/IP conversion gateway 2a becomes available, the management server apparatus 7a in the product maintenance management center P7 stores data that can specify the passing location (P2) of the multifunction machine NM.

At that time, traceability data and environment history data stored in a memory in the wireless sensor network control unit A2 is transferred to the management server apparatus 7a via the ZigBee/IP conversion gateway 2a.

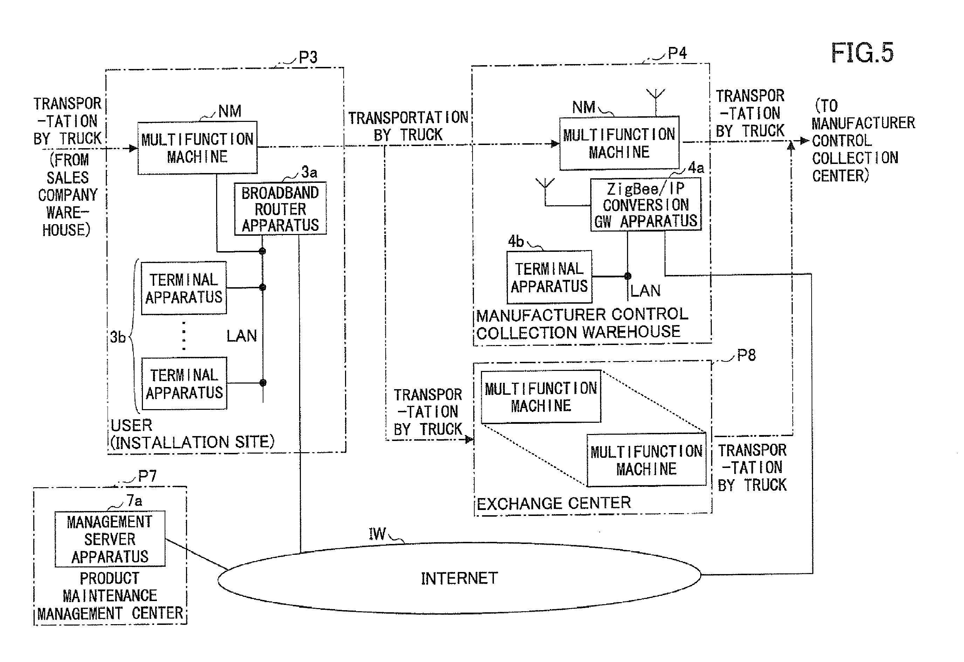

Next, the multifunction machine NM for which a user and an installation site are determined leaves the sales company warehouse P2 and arrives at the user site (installation site) P3 as shown in Fig.5. The ZigBee/IP conversion gateway does not exist in the installation site of the user. But, the installation site is provided with a LAN connected to the Internet IW via a broadband router 3a. Thus, when the multifunction machine NM is installed, and is connected to the LAN, the multifunction machine NM can connect to the Internet IW via the broadband router 3a of the user, so that the multifunction machine NM can communicate with the product maintenance management center P7.

Accordingly, like the previous locations, the management server apparatus 7a receives and stores traceability data and environment history data that are obtained by the multifunction machine NM. In the period of use of the multifunction machine NM at this installation site, the environment history data is transferred to the management server apparatus 7a via the network interface of the multifunction machine NM one after another at a predetermined cycle.

Next, after the whole use period of the multifunction machine NM ends, the multifunction machine NM is collected by the manufacturer as a collected machine, and the multifunction machine NM arrives at a collection warehouse P4 managed by the manufacture. Meanwhile, measurement of the environment history data is continuing in the multifunction machine NM. As shown in Fig.5, like other locations except for the user site, a ZigBee/IP conversion gateway 4a is provided in the manufacturer control collection warehouse P4. Thus, the multifunction machine NM sends traceability data and environment history data to the management server apparatus 7a in the product maintenance management center P7, so that the management server apparatus 7a can store the data, and can know the arrival of the multifunction machine NM at the location P4.

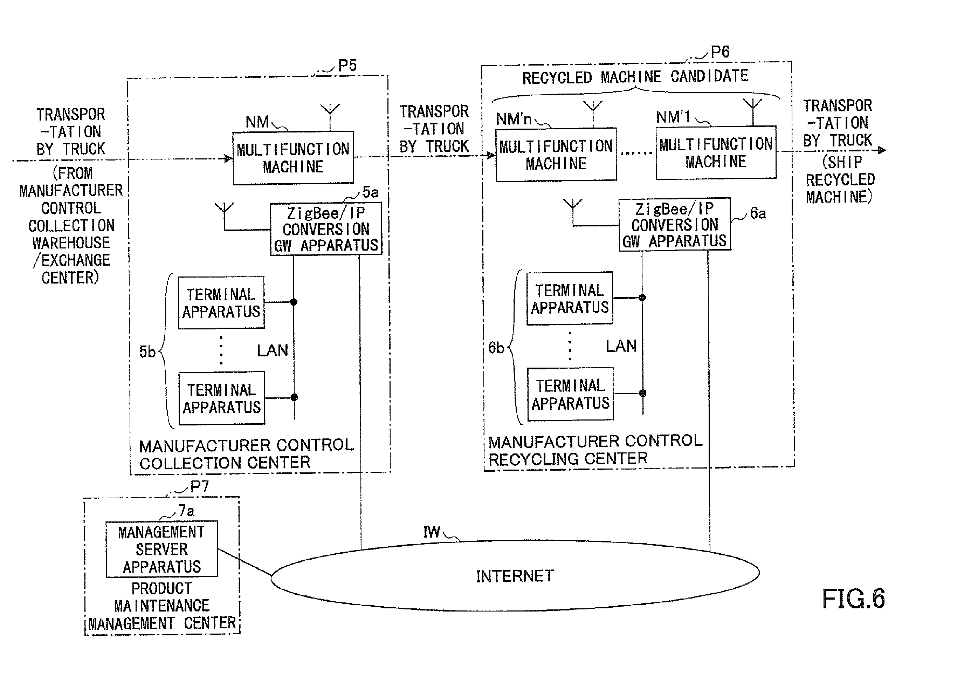

The above-mentioned management control is similarly repeated from the time when the multifunction machine NM leaves the manufacturer control collection warehouse P4 until it enters the manufacturer control recycling center P6 via the manufacturer control collection center P5 as shown in Fig.6. Thus, the multifunction machine NM continues to obtain and store environment history data, and the multifunction machine NM transfers traceability data and sends environment history data to the management server apparatus 7a at each location.

After the multifunction machine NM arrives at the manufacturer control recycling center P6, recycling processes which include recycle availability determination, replacement part selection, and adjustment work are performed by using apparatus specific management data of the multifunction machine NM. The apparatus specific management data includes traceability data and environment history data that are collected by the management server apparatus 7a.

More particularly, conditions required for recycling the collected multifunction machine NM as a complete machine are input from the front panel of the multifunction machine NM, and the input information is transmitted to the management server apparatus 7a in the product maintenance management center P7. The input information is compared with stored data in the management server apparatus 7a. Then, the comparison result (which may include traceability data and environment history data) is displayed on a display part of the front panel or is printed by the multifunction machine NM via the Internet IW and the ZigBee/IP conversion gateway 6a, so that the recycling process worker can know the comparison result instantaneously. The worker checks the result and the actual state of the multifunction machine NM in order to finally determine parts that need to be replaced and/or parts that need to be adjusted for the multifunction machine NM.

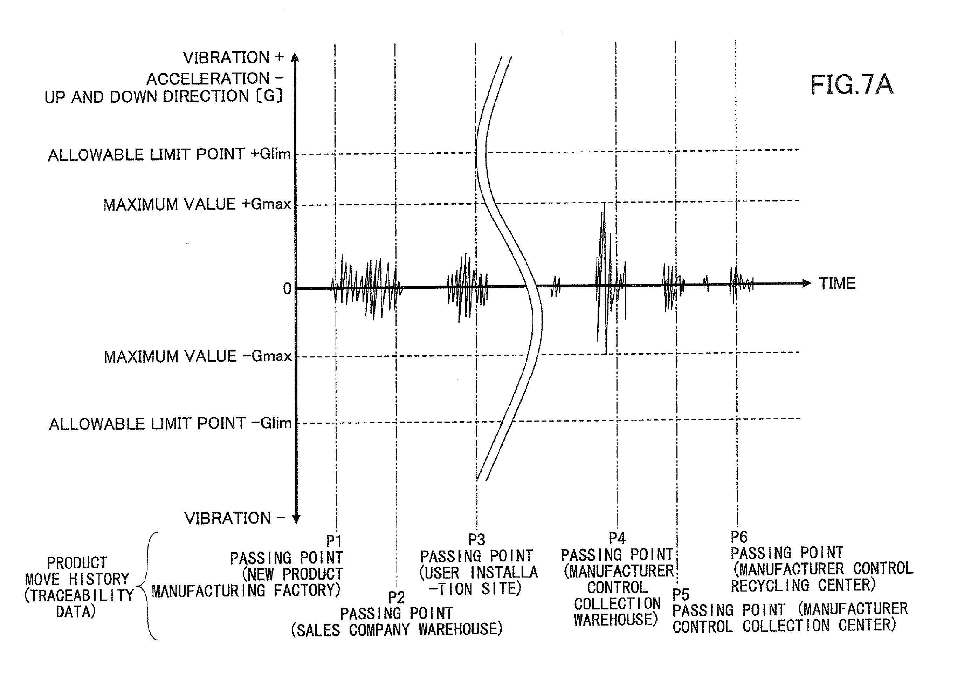

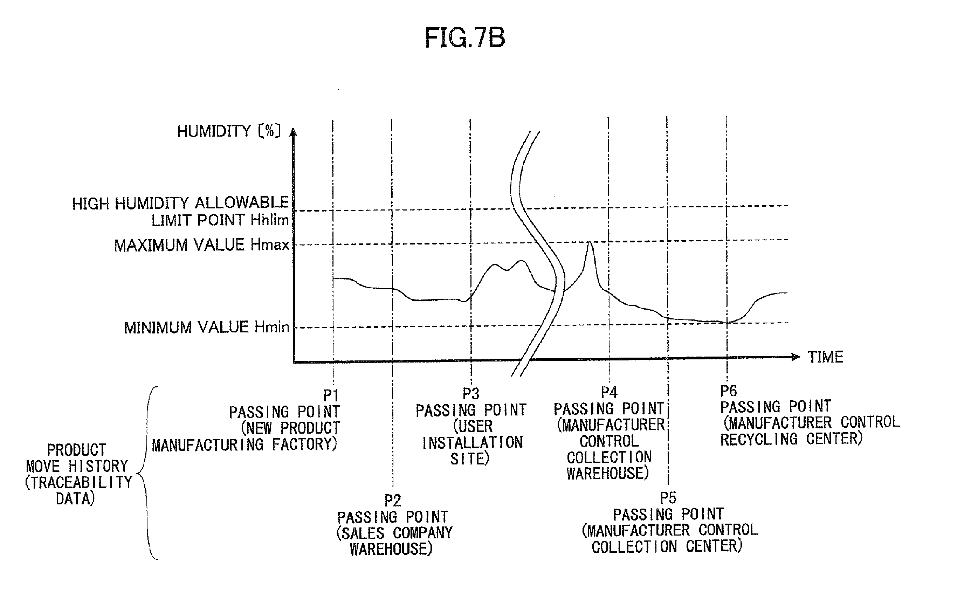

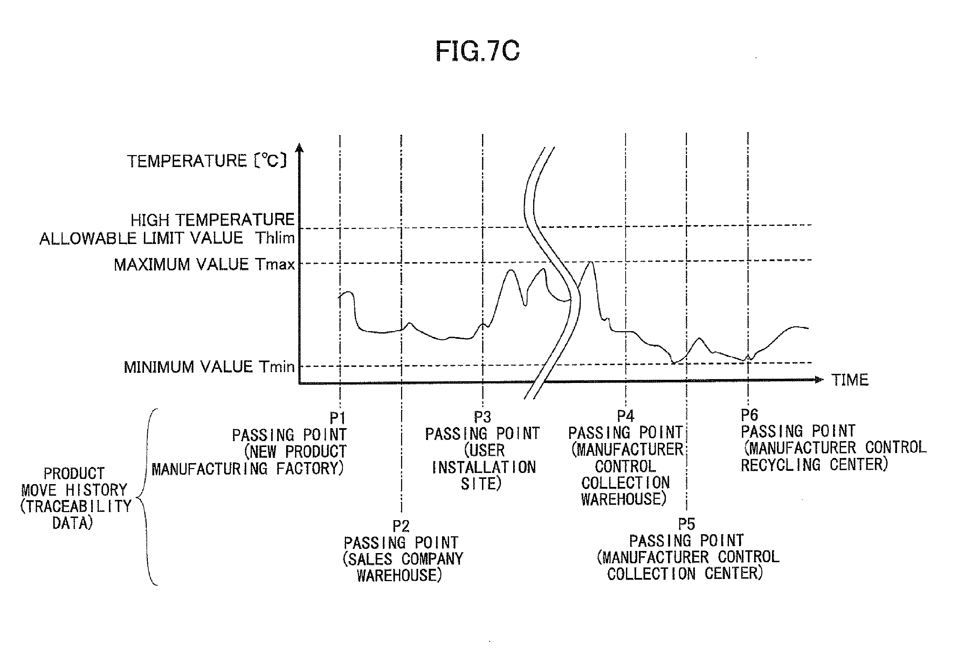

Figs.7A-9C show output examples of traceability data (moving history) and environment history data of a multifunction machine obtained by the recycling aid system of the present embodiment. Figs.7A-9C show the simplest examples in which environment history data used for determining whether the collected multifunction machine can be recycled is limited to parameters of vibration (up and down direction), humidity, and temperature. As shown in the figure, an allowable limit point is provided for each parameter, and a maximum value and a minimum value are shown for each parameter. In Figs.7A-9C, an output format is set such that data is output as a graph and representative values are shown as a maximum value (max) and a minimum value (min).

It can be determined that a collected multifunction machine having history data including a value which exceeds the allowable limit point has deteriorated greatly, and, when this occurs, there is a high possibility that failure occurs. Thus, it is determined that such a collected machine needs replacement of parts or units of large quantity.

The output examples 1 in Figs.7A-7C show that the subject multifunction machine has history data less than the allowable limit point in each of vibration, humidity and temperature. Also, the traceability data of the multifunction machine indicates that the subject multifunction machine has passed through a regular product moving route (product manufacturing factory P1 --> sales company warehouse P2 --> user installation site P3 --> manufacturer control collection warehouse P4 --> manufacturer control collection center P5 --> manufacturer control recycling center P6). Since the environment history data and the traceability data do not indicate any abnormal value, the collected multifunction machine is determined to be a good collected multifunction machine, so that the machine is recycled by performing minimum tune-up in consideration of elements of other apparatus specific data.

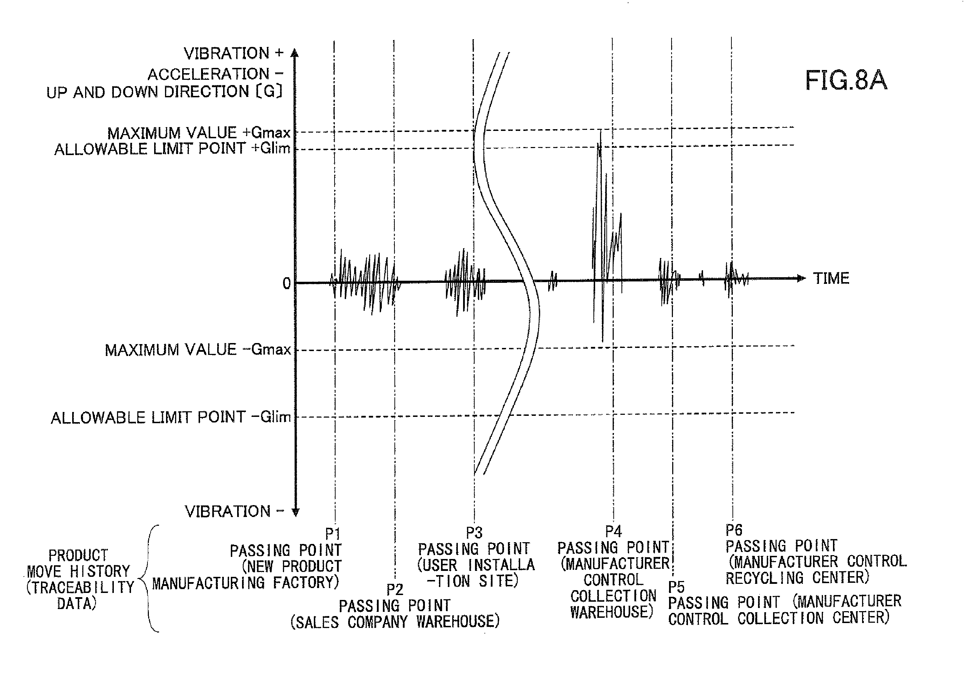

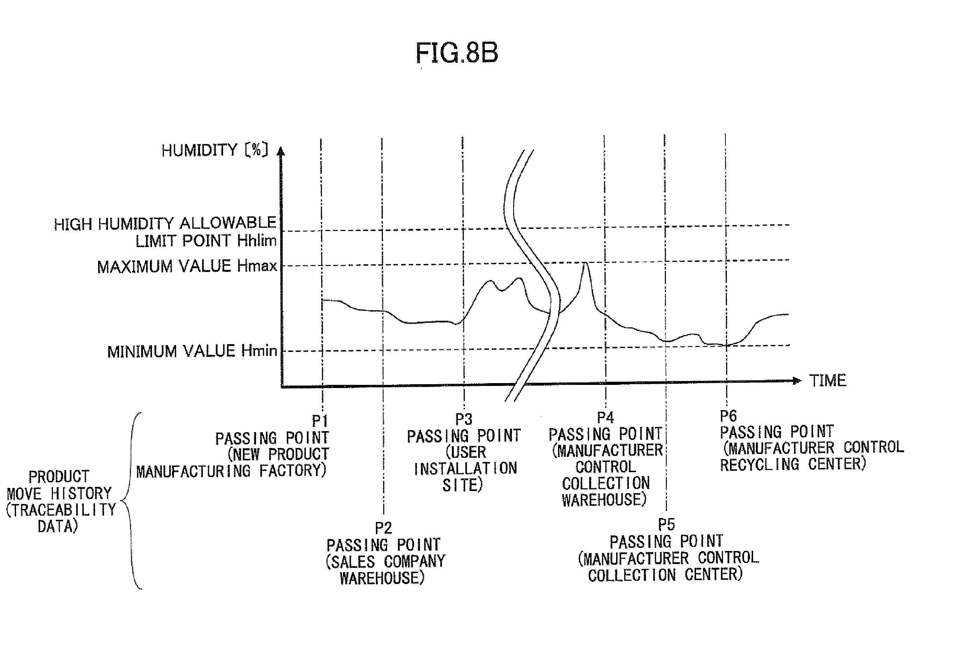

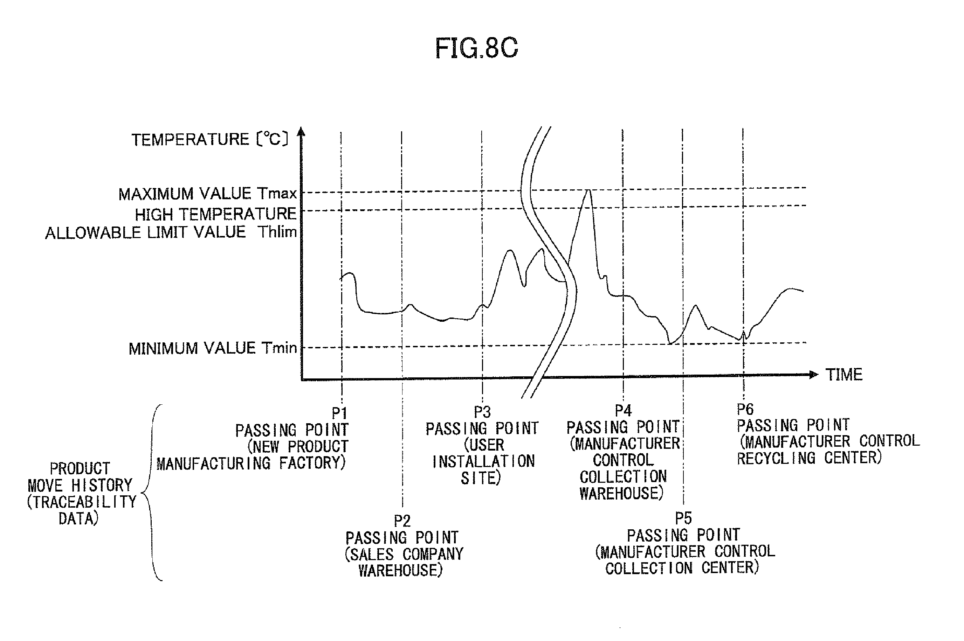

Figs.8A-8C show an example in which the subject collected multifunction machine has passed through the regular route, but, environment history data exceeds the allowable limit point in vibration and temperature. In this case, the management server apparatus 7a compares the environment history data with parts specification data stored in the server apparatus 7a as apparatus specific data. Then, the management server apparatus 7a transmits replacement candidates of parts which may have problem in relation to the unallowable vibration and temperature, and/or transmits an adjusting method for the parts to the display part of the multifunction machine placed in the recycling site or to a personal computer connected to the LAN in the recycling site via the Internet and the ZigBee/IP conversion gateway.

The transmitted data is displayed on the display part or on the computer as a list. In recycling processes, part replacement and adjustment are performed efficiently based on the displayed list so that a complete machine is reproduced from the collected multifunction machine.

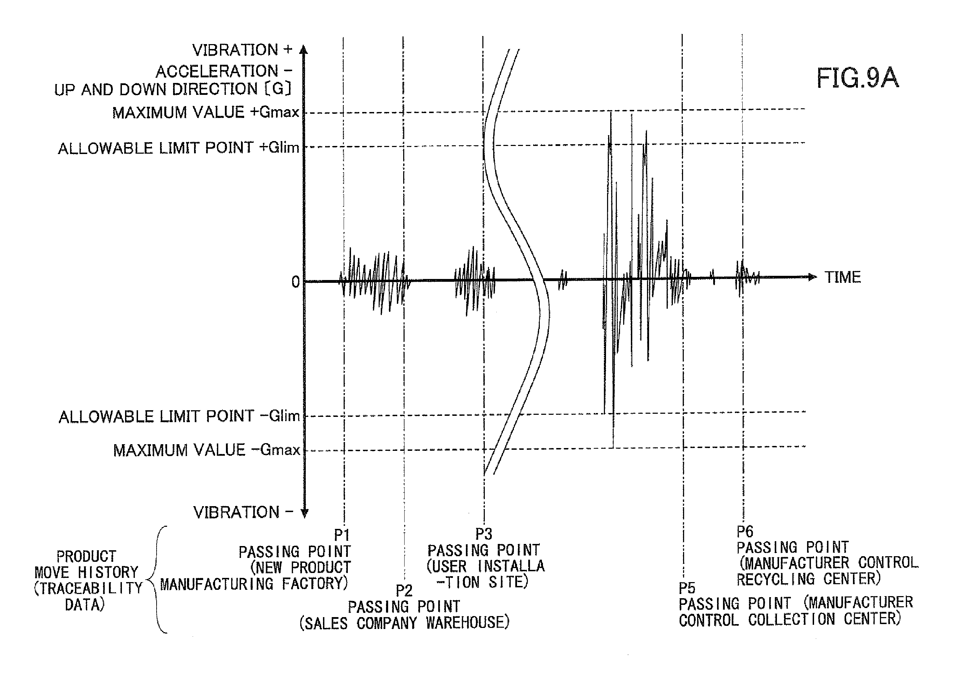

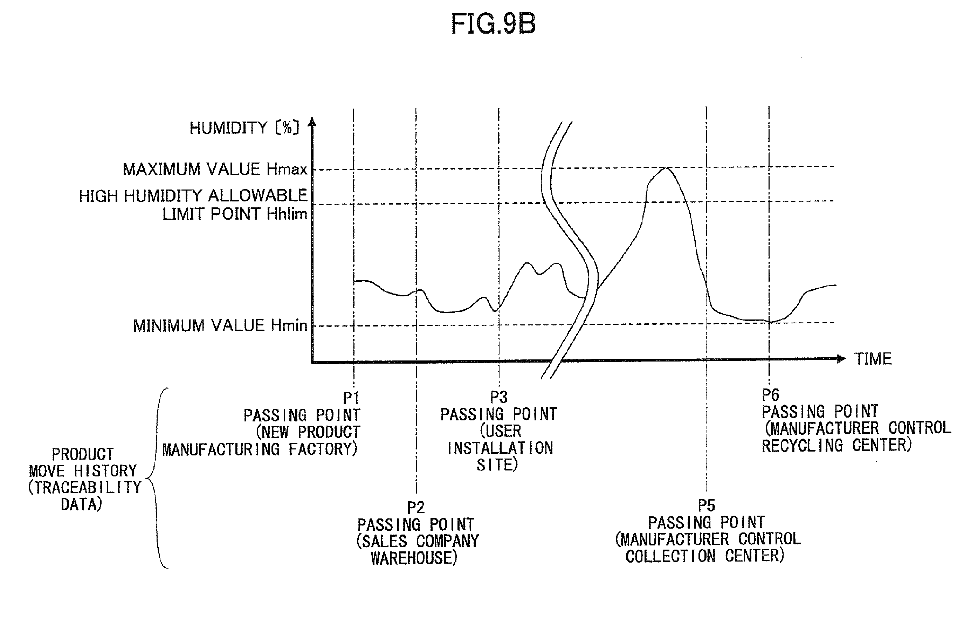

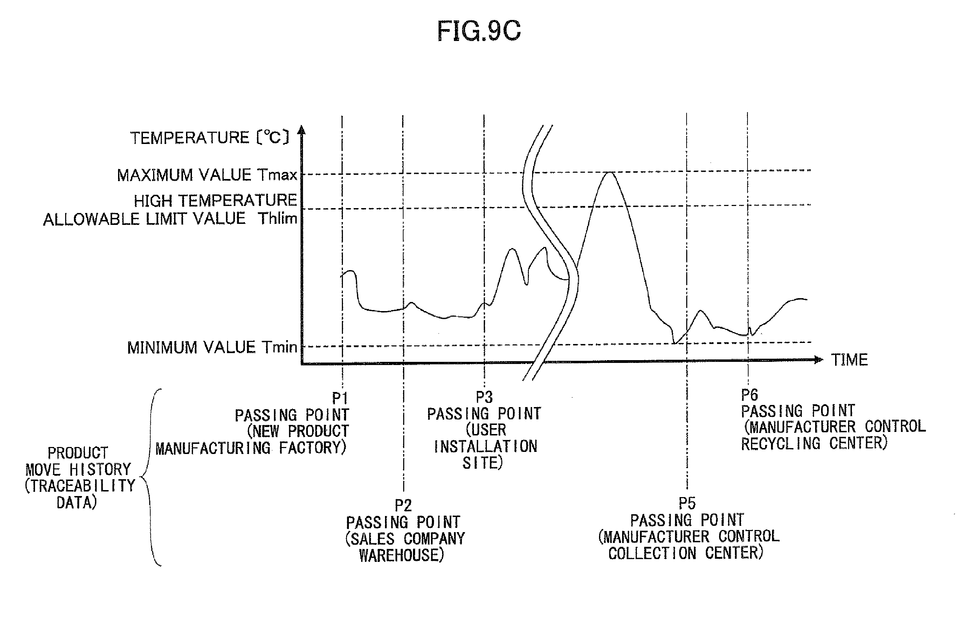

Figs.9A-9C show an example indicating that the subject multifunction machine has not passed through the regular route, and the environment history data exceeds the allowable limit point in all of vibration, humidity and temperature.

More particularly, since the traceability data does not include passing history data at the manufacturer control collection warehouse P4, it can be determined that the subject multifunction machine was not collected in P4 but was collected in an exchange center P8 where products including products of other companies are generally collected, and that the subject multifunction machine arrived as a collected machine from P8.

In addition, since the environment history data far exceeds the allowable limit point in every parameter, it can be determined that the collected multifunction machine has passed hostile environments. In such a case, it is determined that the machine cannot be recycled as a complete machine based on a comprehensive recycling availability determination in the product maintenance management center P7. Thus, the collected multifunction machine is used for resource recycling in other routes, that is, parts and/or units of the collected multifunction machine are recycled, for example.

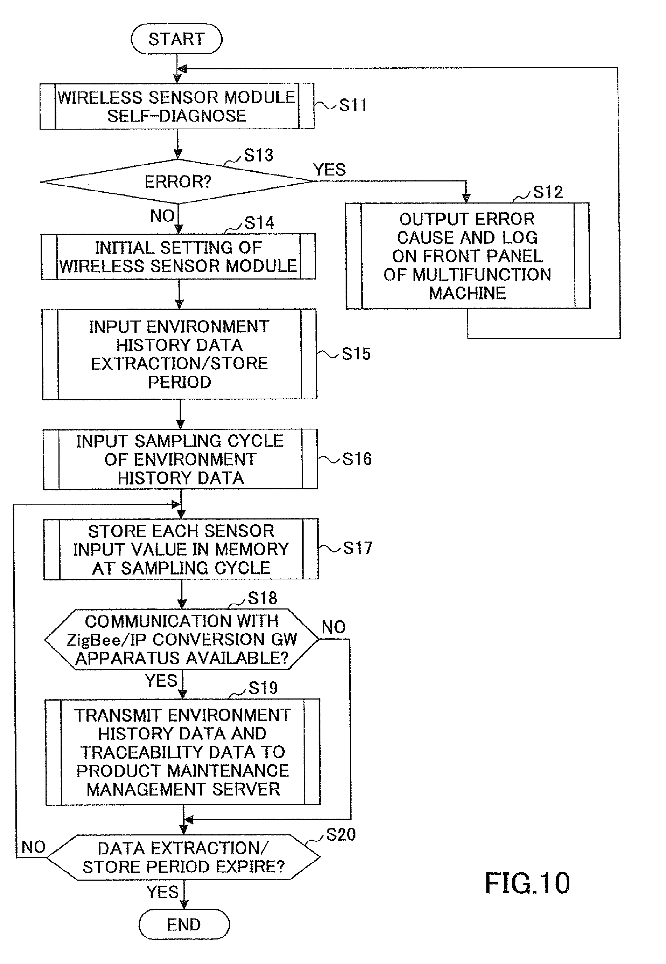

Fig.10 shows a flowchart of an embodiment of the environment history data storing process. In the following processes, processes for initial setting are performed in the new product manufacturing factory P1. Other processes are performed in each place.

First, a worker instructs the multifunction machine to enter the initial setting mode from the front panel, so that the process of the mode starts. Then, the wireless sensor network control unit A2 of the multifunction machine starts self-diagnosis in step S11. More particularly, before starting processes after that, the wireless sensor network control unit A2 executes a diagnosis routine for checking whether functions in the wireless sensor network control unit A2 work normally.

In this process, if some sort of abnormal state occurs, the process goes to step S12, the error cause and log information at the time are displayed on the front panel C5 of the multifunction machine. The process cannot proceed further until the abnormality is recovered.

When there is no error in step S13, the process goes to step S14. In step S14, initial setting such as register setting is performed for the MPU B7 of the wireless sensor network control unit A2 and for mode selection of peripheral control, and the like. Initial setting for the image forming apparatus control unit A1 has already been performed in the manufacturing process before starting this process routine.

When the initial setting is performed normally without any problems, the process goes to step S15, so that the wireless sensor network control unit A2 enters in a state of waiting for inputs of the environment history data extraction/store period. The extraction/store period is a value determined beforehand based on parameters such as a product assurance period of the multifunction machine as a new product, a product assurance period of a recycled multifunction machine, and specification of the memory in the wireless sensor network control unit A2, and the like.

When this value is normally input as the extraction/store period, the process goes to step S16. The wireless sensor network control unit A2 enters a state of waiting for inputs of an environment history data sampling cycle. When a value determined based on parameters such as the product assurance period and the specification of the wireless sensor network control unit A2 is normally input, the process goes to step S17.

The step S17 is a state in which every preprocessing step necessary for execution of the wireless sensor network control unit A2 has been completed. From this step, physical measurement data are obtained by each sensor, and stored into the memory via the MPU B7 at the environment history data sampling cycle.

Next, when the multifunction machine NM as a new product leaves the new product manufacturing factory P1 and arrives at the sales company warehouse P2, the multifunction machine NW becomes able to communicate with the ZigBee/IP conversion gateway 2a. Thus, the process goes to step S19, so that environment history data and traceability data stored so far are transferred to the management server apparatus 7a. These processes are repeatedly performed, and continue until the environment history data store period set in step S15 expires.

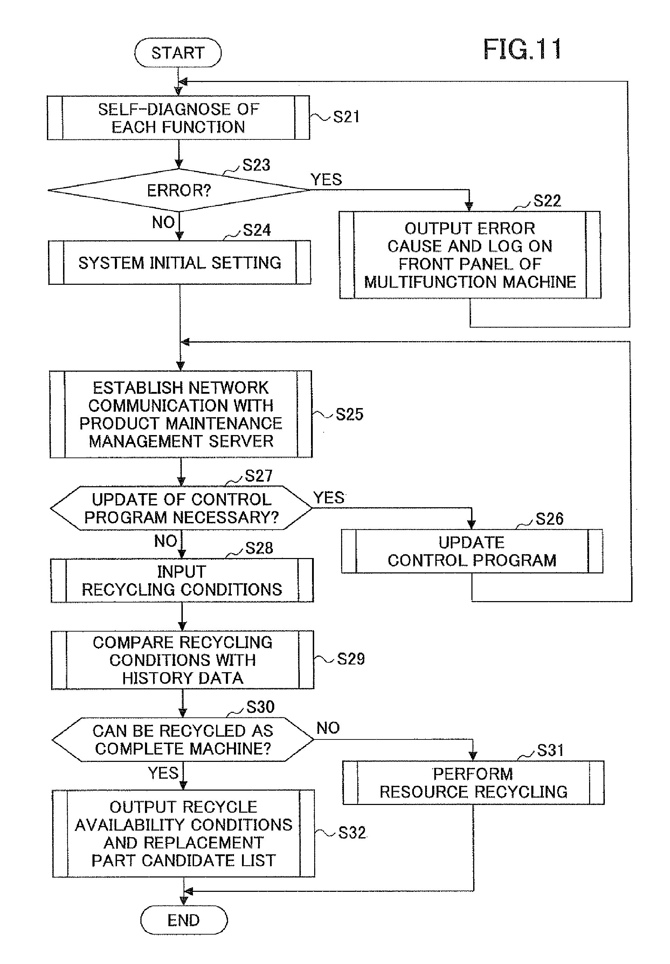

Next, a replacement part candidate list output process is described as an example process in recycling processes. When the multifunction machine (collected machine) arrives at the manufacturer control recycling center P6 via the regular passing points from the sales company warehouse P2, recycling processes for recycling the collected multifunction machine into a complete machine start. For performing recycling processes efficiently, it is necessary to determine whether recycling is available, and to determine parts to be replaced and parts to be adjusted. Fig.11 shows a flowchart of the replacement part candidate list output process of the present embodiment.

First, the worker of the recycling process instructs the multifunction machine to enter a recycling mode from the front panel of the multifunction machine so that the multifunction machine performs self-diagnosis in step S21, At this stage, collected multifunction machines are largely varied in quality. Thus, there is a high possibility that even a basic function cannot be performed normally by a subject collected multifunction machine. Therefore, the multifunction machine performs self-diagnoses for all functions including the basic function and the wireless sensor network function in step S21.

When an error is detected in step S23, the multifunction machine displays the error cause and log information at that time on the display part of the front panel C5 in step S22. In this step, if a serious error relating to the basic function is detected, it is determined that the multifunction machine cannot be recycled.

If there is no error, the process proceeds to step S24, and initial setting for the system is performed. For the initial setting, a person in charge of the process inputs setting information. The setting information may indicate a client and the like from which conditions are input, and indicates a peripheral apparatus and the like from which the result is output.

Since the system has default values, if no data is input, the default values are used.

When the input is performed normally, the process goes to step S25. In step S25, a network communication is established between the multifunction machine and the management server apparatus 7a in the product maintenance management center P7. In this process, the management server apparatus 7a determines whether update of a control program in the multifunction machine is necessary in step 27. If it is determined that the update is necessary, the control program is updated from the management server apparatus 7a in step S26. When it is determined that the update is unnecessary, the multifunction machine enters a state of waiting for recycling condition input.

In the present embodiment, the user inputs three items as the conditions for determining availability of recycling of the multifunction machine. The three items are an allowable limit value of the environment history temperature, an allowable limit value of the environment history humidity, and an allowable limit value of environment history vibration. When the system determines that the input values are proper values, the values are sent to the management server apparatus 7a.

Then, the management server apparatus 7a compares the conditions with every machine specific history data that has been stored in the management server apparatus 7a in step S29, so that it is determined whether the multifunction machine can be recycled as a complete machine in step S30.

If it is determined that the multifunction machine cannot be recycled, the multifunction machine is not recycled as a complete machine, but is carried to other processes for utilizing the multifunction machine as resource recycling or parts/units recycling in step S31.

If it is determined that recycling is available, conditions (adjustment items, check items and the like) and a list of necessary replacement part candidates are output from the peripheral apparatus or the terminal that are set before. By referring to the list, recycling of the multifunction machine is efficiently performed in the recycling process.

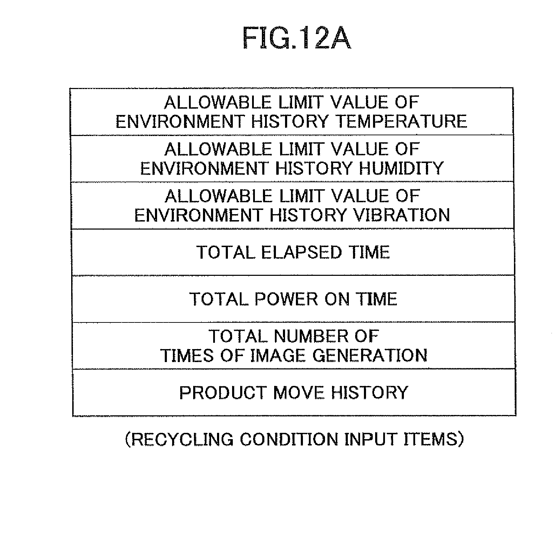

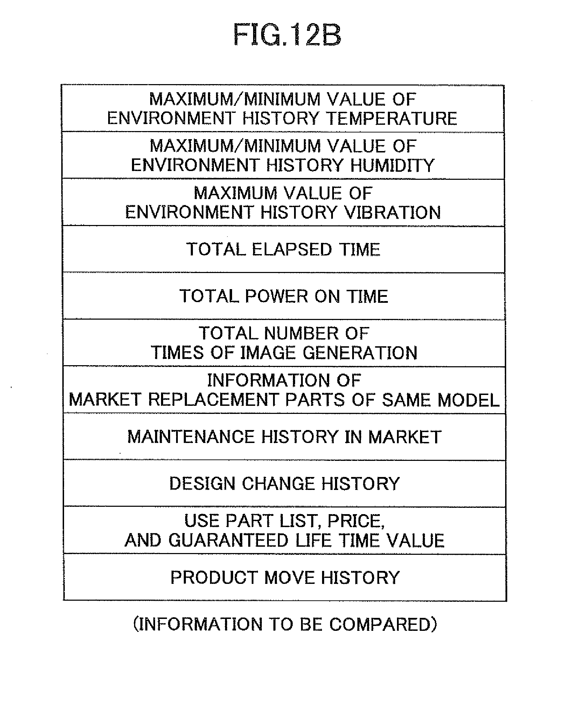

In the above-described embodiment, an extremely simple example is shown for the sake of simplicity of explanation. But, in actuality, the product maintenance management center P7 may manage apparatus specific management data including additional data which is not described in the above embodiment. The apparatus specific management data may include a total elapsed-time from shipment of new product until delivery to the recycling factory, a total elapsed time of power-on, a total number of times of producing images, maintenance history of the multifunction machines in the market, and history of part replacement due to design change, and the like. The determination of availability of recycling and replacement /adjustment items are determined based on such apparatus specific management data. By using these items of data effectively, the recycling aid system of the present invention includes unlimited possibilities for improving efficiency in recycling processes. Fig.12A shows examples of recycling condition inputs that may be used, and Fig.12B shows examples of information to be compared with the condition items.

As mentioned above, the system of the present embodiment is provided with a function for periodically extracting and storing environment history data such as temperature, humidity and vibration at a specific part in the image forming apparatus (electronic apparatus) during the whole period, including any unused period, from the time when the electronic apparatus is shipped as a new product to the time when the electronic apparatus is collected due to expiration of the product lifetime and is recycled in the factory, in which the environment history data indicates use environment, transportation environment or storage environment state of the electronic apparatus. In addition, the system is provided with a function for storing traceability data of the route from the shipment to the recycling factory.

Multifaceted data including not only accumulated use time data but also unused time and route history until collection can be used for determining recycling of the electronic apparatus (including diagnosis of residual lifetime and diagnosis of failure). Thus, an accurate diagnosis can be carried out based on actual circumstances. As a result, the quality of recycled electronic apparatuses can be improved, and the number of recycled electronic apparatuses introduced on the market can increase. Eventually, the technique of the present invention can contribute to resources recycling and environment preservation.

In addition, according to the technique of the present embodiment, by inputting necessary conditions for recycling the electronic apparatus from the operation panel of the electronic apparatus, based on the whole history data from shipment of the electronic apparatus until the electronic apparatus is returned to the recycling factory, the electronic apparatus can output availability determination data indicating whether the electronic apparatus or the inside unit or the like can be recycled and information on necessary conditions to the display part or to a printing mechanism.

The whole data of the electronic apparatus including not only the environment history data and the traceability data but also specific data stored in the management server can be used for residual lifetime diagnosis or failure diagnosis. Accordingly, an accurate diagnosis may be carried out comprehensively according to actual situations from various perspectives.

In addition, since the system of the present embodiment includes a function for easily outputting, at the recycling factory, recycling availability determination results, recycling process instruction lists, replacement parts candidate lists and the like, an efficiency in process flow in the recycling stage (including residual life time diagnosis or failure diagnosis) can be improved.

According to the technique of the present embodiment, it is not necessary to disassemble the electronic apparatus for diagnosis. Since special tools or measurement devices or the like are not necessary for carrying out a diagnosis, diagnosis time can be reduced. Accordingly, the cost for recycling can be reduced. In addition, the time required for feedback to design can be reduced by effectively using data in the product maintenance management server, and the quality of the electronic apparatus can be improved. Thus, the technique of the present invention contributes to increase of the number of the recycled electronic apparatuses on the market. As a result, the technique contributes to resource recycling and environment preservation.

The wireless sensor network module (control unit) necessary for storing and communication of the environment history data is provided separately from each module of the main functions which are necessary for the main purpose of the electronic apparatus. In addition, the wireless sensor network module is configured to be able to easily connect to the controller of the electronic apparatus via a general I/F. Thus, the wireless senor network module can be used for general purposes irrespective of the specification of the main function or the model of the electronic apparatus. Thus, the module can be realized at low cost, and the module that has been used can be recycled for another model. As a result, the technique of the present invention contributes to effective use of resources and environment preservation.

The recycling aid system of the present embodiment is a successive data storage type system. More particularly, in the recycling aid system, a data transmit and receive terminal or a relay node is provided at each passing point for obtaining traceability data of the electronic apparatus. Each time when the electronic apparatus arrives at a passing point, the electronic apparatus sends, to the product maintenance management server, the environment history data and the route traceability data stored in the wireless sensor network module so far via the data transmit and receive terminal or the relay node. After sending the data, new data can be stored in the area that becomes available in the storage device in the wireless sensor network module. Accordingly, storage capacity of the storing device in the wireless sensor network module can be configured to be as small as possible. Thus, this feature has the effects of reducing cost for operating the system, and of reducing a failure ratio of the apparatus. The history data and the like can be stored safely, quickly and efficiently. As a result, accurate and quick recycling (including residual lifetime diagnosis or failure diagnosis) becomes possible.

In addition, the wireless sensor network module includes a primary battery or a secondary battery for supplying power in a period when the electronic apparatus is not used. Also, the wireless sensor network module includes a power source selection control function which enables the module to receive power from the AC input power source circuit in the electronic apparatus when the electronic apparatus is used. Thus, consumption of the battery in the wireless sensor network module can be kept small. As a result, a system which is stable for a long time can be provided.

Also, the wireless sensor network module includes a function for automatically switching between charge and discharge of a secondary battery, which function can charge a secondary battery in the wireless sensor network module by the energy obtained from the AC input power source. This function has the effect of operating the system stably for as long a time as possible. In addition, by using the secondary battery, consumption of a battery as a part can be largely reduced.

In addition, control programs of the electronic apparatus and the wireless sensor network module can be updated via the network interface in the electronic apparatus. This function has the effects that malfunction of the program can be quickly fixed, and that program changes due to technical advances can be quickly supported. Thus, this function contributes to preventing program malfunction and to improving work efficiency of users.

In addition, since the environment history data extraction/store period can be set arbitrarily from the operation panel of the electronic apparatus or via the network interface, the system can be easily used without replacement of hardware for various electronic apparatuses which are different from each other in model or specification. Since the setting can be carried out without any special apparatus, this technique contributes to reducing total cost for manufacturing and using the electronic apparatus. In addition, it becomes possible to store proper environment history data according to the specification of the electronic apparatus for a long time. Thus, the technique can contribute to performing an accurate diagnosis.

Since the environment history data sampling cycle can be arbitrarily set via the operation panel or the network interface of the electronic apparatus, various system use methods which are different from each other due to models and specifications of the electronic apparatus can be flexibly supported. Accordingly, the environment history data can be collected under optimal condition, so that analysis for the data can be performed effectively and accurately.

In addition, since output format and items of representative values of the stored environment history data can be arbitrarily set via the operation panel or the network interface of the electronic apparatus, the environment history data can be analyzed quickly. Thus, time for feedback to a design department can be reduced. As a result, it becomes possible to reduce diagnosis time in the recycling process, so that the cost for the system can be reduced. Ultimately, the technique of the present invention contributes to the improvement of reliability of the product from shipment to recycling.

In addition, the electronic apparatus can be provided with an operation security function such that each operation such as display instruction and print output instruction for the history data cannot be executed by unspecified users. According to the operation security function, the electronic apparatus can be used only by inputting a machine number of the electronic apparatus, operator ID, and a password, for example. Accordingly, an occurrence of trouble of the electronic apparatus due to erroneous operation can be prevented, and a malfunction of the system due to use by a third person can be prevented. In addition, leakage of secret information of the manufacturer and leakage of personal information can be prevented. As a result, a reliable and accurate diagnosis becomes possible by the system of the present invention.

The present invention is not limited to the specifically disclosed embodiments, and variations and modifications may be made without departing from the scope of the present invention.

## Claims

1. A recycling aid system comprising:
an electronic apparatus;
a radio communication apparatus that is placed in a location on a route through which the electronic apparatus moves; and
a management server apparatus configured to perform data communication with the electronic apparatus via the radio communication apparatus;
the electronic apparatus **characterized by**;
an environment history data obtaining unit configured to obtain physical measurement data of an environment of the electronic apparatus, and to store the physical measurement data in a storage unit as environment history data;
a traceability data obtaining unit configured to obtain traceability data used for determining the route, and to store the traceability data in the storage unit;
a communication unit configured to transmit the environment history data and the traceability data to the management server apparatus via the radio communication apparatus; and
an output unit configured to receive data including the environment history data and the traceability data from the management server apparatus, and to visually output the received data in order to aid a recycling process for the electronic apparatus.

2. The recycling aid system as claimed in claim 1, wherein the electronic apparatus deletes the environment history data and the traceability data from the storage unit after the environment history data and the traceability data are transmitted to the management server apparatus.

3. The recycling aid system as claimed in claim 1 or 2, wherein the environment history data obtaining unit, the traceability data obtaining unit and communication unit are driven by a power source unit different from a power source unit of a main body of the electronic apparatus such that the environment history data obtaining unit, the traceability data obtaining unit and communication unit operate even when the electronic apparatus is off.

4. The recycling aid system as claimed claim 3, wherein the power source unit different from the power source unit of the main body of the electronic apparatus includes a secondary battery that is charged by power supplied from the power source unit of the main body of the electronic apparatus.

5. The recycling aid system as claimed in claim any one of claims 1 - 4, further comprising an input unit configured to input a sampling cycle of the environment history data, wherein the environment history data obtaining unit obtains the physical measurement data at the sampling cycle.

6. The recycling aid system as claimed in any one of claims 1 - 5, wherein the management server apparatus compares the environment history data with condition data for recycling, and sends a comparison result to the electronic apparatus.

7. An electronic apparatus used in a recycling aid system, the recycling aid system including a radio communication apparatus that is placed in a location on a route through which the electronic apparatus moves; and a management server apparatus configured to perform data communication with the electronic apparatus via the radio communication apparatus, the electronic apparatus **characterized by**:
an environment history data obtaining unit configured to obtain physical measurement data of environment of the electronic apparatus, and to store the physical measurement data in a storage unit as environment history data;
a traceability data obtaining unit configured to obtain traceability data used for determining the route, and to store the traceability data in the storage unit;
a communication unit configured to transmit the environment history data and the traceability data to the management server apparatus via the radio communication apparatus; and
an output unit configured to receive data including the environment history data and the traceability data from the management server apparatus, and to visually output the received data in order to aid a recycling process for the electronic apparatus.

8. The electronic apparatus as claimed in claim 7, wherein the electronic apparatus deletes the environment history data and the traceability data from the storage unit after the environment history data and the traceability data are transmitted to the management server apparatus.

9. The electronic apparatus as claimed in claim 7 or 8, wherein the environment history data obtaining unit, the traceability data obtaining unit and communication unit are driven by a power source unit different from a power source unit of a main body of the electronic apparatus such that the environment history data obtaining unit, the traceability data obtaining unit and communication unit operate even when the electronic apparatus is off.

10. The electronic apparatus as claimed in claim 9, wherein the power source unit different from the power source unit of the main body of the electronic apparatus includes a secondary battery that is charged by power supplied from the power source unit of the main body of the electronic apparatus.

11. The electronic apparatus as claimed in any one of claims 7 - 10, further comprising an input unit configured to input a sampling cycle of the environment history data, wherein the environment history data obtaining unit obtain the physical measurement data at the sampling cycle.

12. A recycling aid method performed by an electronic apparatus used in a recycling aid system, the recycling aid system including a radio communication apparatus that is placed in a location on a route through which the electronic apparatus moves; and a management server apparatus configured to perform data communication with the electronic apparatus via the radio communication apparatus, the recycling aid method **characterized by**:
obtaining physical measurement data of an environment of the electronic apparatus, and storing the physical measurement data in a storage unit as environment history data;
obtaining traceability data used for determining the route, and storing the traceability data in the storage unit;
transmitting the environment history data and the traceability data to the management server apparatus via the radio communication apparatus; and
receiving data including the environment history data and the traceability data from the management server apparatus, and visually outputting the received data in order to aid a recycling process for the electronic apparatus.

13. The recycling aid method as claimed in claim 12, wherein the electronic apparatus deletes the environment history data and the traceability data from the storage unit after the environment history data and the traceability data are transmitted to the management server apparatus.
